# EUROPEAN PATENT SPECIFICATION

(11) **EP 1 412 255 B1**
(45) Date of publication and mention of the grant of the patent: **20.01.2010**
(21) Application number: 02741077.8
(22) Date of filing: 05.07.2002
(51) Int. Cl.: B65D 33/00, B31B 23/00

(54) **FLATTENING AND GUSSETING DEVICE, METHOD AND BAG**
VORRICHTUNG ZUM GLÄTTEN UND BILDEN VON SEITENFALTEN, VERFAHREN SOWIE BEUTEL
DISPOSITIF D'APLATISSEMENT ET DE PLIAGE EN SOUFFLETS, PROCEDE ASSOCIE ET SAC RESULTANT

(30) Priority: 20.07.2001 NO 20013610
(43) Date of publication of application: 28.04.2004
(73) Proprietor: Folie Invest AS, 0781 Oslo (NO)
(72) Inventor: LOEVOLD, Kjell, N-0781 Oslo (NO)
(74) Representative: Orsnes, Henrik Egede
(86) International application number: PCT/IB2002/002639
(87) International publication number: WO 2003/010056

(56) References cited:
- DE-B- 1 046 997
- JP-A- 2001 114 299

## Description

The present invention relates to an easy to open plastic film bag comprising a front bag wall and a rear bag wall joined to one another along bottom edges thereof and along opposed mutually substantially parallel lateral edges thereof by a first and a second inwardly directed lateral gusset extending along a respective one of said lateral edges to define a bag having a top opening defined by top edges of said front and rear walls.

Plastic film bags of this type are used as produce or grocery bags and the film, for instance of polyethylene, is normally quite thin. Such bags are difficult to open because of the tendency of the film of the front and rear walls to cling to one another because of several factors such as static electricity, cold welding, the cutting operations for forming the edges of the walls defining the bag opening and so on. As the exterior surfaces of the bag walls are smooth, it is difficult, particularly for persons having dry fingers, to apply enough frictional forces to the bag wall films to overcome said tendency to cling. Many persons moist their fingers with saliva to thereby achieve sufficient friction between the fingers and the bag wall surfaces. This is unhygienic because such persons often thereafter touch other objects subsequently bought by another person.

A bag of the type in reference is disclosed in GB 2 271 756 A where an enhanced-friction zone is provided on the bag wall outer surfaces near the top opening by knurling, stippling or perforation of the film material of the zone. It is difficult to avoid that this roughening operation does not substantially increase the tendency of the bag walls to cling to one another.

US 4,911,560 A discloses a gusset bag of the type indicated where pleats are formed in the front and rear bag walls in the central region thereof between the gussets. By pulling the sides of the bag away from each other, the pleats slide open and thereby open the mouth of the bag. This bag is relatively difficult to manufacture and the pleats arranged along the central region give rise to an undesirable configuration of the bag bottom with resulting stress peaks at the bottom of the bag when fully loaded with produce or the like.

GB 2 289 038 A discloses a non-gusseted bag of the T-shirt type having pleats in the front and rear walls in the region thereof between the handles. By pulling the handles away from each other, the pleats slide open and the bag mouth is opened. This bag suffers from the same disadvantages as the bag according to US 4,911,560 A discussed above.

It is a main object of the invention to provide an easy to open gusseted plastic film bag of the type indicated which is easy to manufacture, wherein the stress peaks at the bottom of the bag in loaded condition are minimized and where the desired configuration of the bag in loaded condition is as regular as possible.

JP 2001 114 299 A discloses an easy to open plastic film bag in which the front and rear walls are laterally displaced relative to one another such that the lateral edge of said front wall constituting the boundary between said front bag wall and said first and second lateral gusset, respectively, extends at a first and a second distance, respectively, from the corresponding lateral edge of said rear wall constituting the boundary between said rear bag wall and said first and second lateral gusset, respectively, thereby defining a first strip-like lateral zone with a width equal to said first distance and constituted by a portion of said first gusset and a portion of said front wall, and a second strip-like lateral zone with a width equal to said second distance and constituted by a portion of said second gusset and a portion of said rear wall.

In connection with bags according to the invention, with or without handles, said first and second distances should be as small as possible relative to the overall dimensions of the bag and with due consideration to the ease of gripping said lateral zones, because the smaller the distances are, the less the total width of the each of the lateral gussets is reduced which is of importance for the total volume of the bag in fully loaded condition. Furthermore, in connection with a T-shirt bag according to the invention, the strength of the handles will be reduced less the smaller said distances are.

Therefore, according to the invention, said first and/or second distance is less than 16mm, preferably less than 14mm.

By gripping the two opposed lateral zones and pulling the zones away from one another, the panels of each of the lateral gussets slide relative to one another thereby causing the front and rear bag walls to slide relative to one another and eliminate the tendency to cling to one another.

Hereby, the lateral gussets function as the pleats in the prior art bags discussed above but do not require further manufacturing steps and do not create deleterious geometrical conditions at the bottom of the bag with resulting stress peaks.

Although said first and second distances may be different as long as lateral zones wide enough to be gripped are created, in the currently preferred embodiment of a bag according to the invention said first and second distances are substantially the same size such that the widths of said first and second lateral zones are substantially the same.

Advantageously, the bag according to the invention may be a bag with two handles, for instance a T-shirt bag, the handles being integral with said walls and said gussets and extending upwards at the opposed ends of said top opening and inwards from said lateral edges, the width of each of said handles measured from the respective lateral edge being larger than the respective one of said first and second distances such that said first and second lateral zones constitute a lateral portion of the respective handle. Hereby, both panels of each lateral gusset contribute to the strength of the handles.

It is currently preferred that the first and second distances are between 10mm and 14mm.

In the currently preferred embodiment of a bag according to the invention, indicia are applied, for instance by printing, to the outer surface of said front wall and/or said rear wall for indicating where and/or how said strip-like lateral zones are to be gripped and manipulated, and said indicia may advantageously comprise printing applied within an area of at least one of said lateral zones and/or an arrow pointing towards a certain area of at least one of said lateral zones.

In an alternative embodiment of a bag according to the invention, an aperture is provided extending through at least one of said front and rear walls and each gusset, said aperture extending inwards from a point located between the innermost and the outermost of the pair of lateral edges of the front and rear walls corresponding to said gusset, preferably to a point located inwards of the innermost of said pair of lateral edges.

The aperture may thus be located entirely within one of said lateral strips or may interrupt the innermost of the lateral edges corresponding to the respective gusset.

Hereby, the opening of the bag may be carried out by inserting a finger in the aperture instead of gripping the respective lateral zone which may be easier for particularly elderly persons with reduced dexterity or eyesight. Thus the width of the respective lateral zone may be smaller because it does not have to be gripped. The apertures will furthermore allow the bags to be dispensed and opened at the same time by inserting the diverging arms of prior art bag dispensing racks in said apertures.

In another aspect, the invention furthermore relates to a method of manufacturing easy to open plastic film bags, each comprising a front bag wall and a rear bag wall joined to one another along bottom edges thereof and along opposed mutually substantially parallel lateral edges thereof by a first and a second inwardly directed lateral gusset extending along a respective one of said lateral edges to define a bag having a top opening defined by top edges of said front and rear walls, said front and rear walls being laterally displaced relative to one another such that the lateral edge of said front wall constituting the boundary between said front bag wall and said first and second lateral gusset, respectively, extends at a first and a second distance, respectively, from the corresponding lateral edge of said rear wall constituting the boundary between said rear bag wall and said first and second lateral gusset, respectively, thereby defining a first strip-like lateral zone with a width equal to said first distance and constituted by a portion of said first gusset and a portion of said front wall, and a second strip-like lateral zone with a width equal to said second distance and constituted by a portion of said second gusset and a portion of said rear wall, the method comprising the following steps:
- providing a continuous tube of a plastic film material,
- feeding said tube to a flattening and gusseting device in the direction of the tube axis,
- flattening said tube by pressing the sides thereof against each other in the direction of a first diameter of said tube substantially perpendicular to said axis,
- forming said first and second lateral gusset, preferably during said flattening step, by applying a first and a second pressing means, respectively, of said device to said tube for pressing generally opposed, but mutually offset, regions of the film material of said tube inwards in a direction parallel to a second diameter of said tube substantially perpendicular to said first diameter, the first and second pressing means being displaced a first distance and a second distance, respectively, with respect to said second diameter in mutually opposed directions parallel to said first diameter such that the widths of the two inwardly directed, mutually joined panels of each lateral gusset formed thereby are different such that said first and second lateral zones are formed.

Hereby, a very simple and easy to perform method of providing an easy to open bag according to the invention is provided where the manufacturing process is in no way more complicated than the prior art manufacturing process for producing gusseted bags of the type in reference.

In a final aspect, the present invention relates to a flattening and gusseting device for manufacturing easy to open plastic film bags each comprising a front bag wall and a rear bag wall joined to one another along bottom edges thereof and along opposed mutually substantially parallel lateral edges thereof by a first and a second inwardly directed lateral gusset extending along a respective one of said lateral edges to define a bag having a top opening defined by top edges of said front and rear walls, said front and rear walls being laterally displaced relative to one another such that the lateral edge of said front wall constituting the boundary between said front bag wall and said first and second lateral gusset, respectively, extends at a first and a second distance, respectively, from the corresponding lateral edge of said rear wall constituting the boundary between said rear bag wall and said first and second lateral gusset, respectively, thereby defining a first strip-like lateral zone with a width equal to said first distance and constituted by a portion of said first gusset and a portion of said front wall, and a second strip-like lateral zone with a width equal to said second distance and constituted by a portion of said second gusset and a portion of said rear wall, said device comprising
- a driven roller for pulling a flattened extruded tube of plastic film material through said device,
- two converging arrays of flattening rollers arranged and adapted for flattening said tube when said tube is pulled between said arrays iri the converging direction thereof,
- two generally opposed pressing means for pressing generally opposed regions of said tube inwards when said tube is pulled between said pressing means,
said pressing means being arranged displaceable both in a first radial direction towards the axis of said tube and a second direction transverse to, preferably at right angles to, said first direction such that said generally opposed regions may be mutually offset with respect to said axis to form said first and second lateral zones.

Hereby, a gusseting and flattening device is provided which only requires a relatively simple and cheap modification of a prior art device whereby the usual and well understood manufacturing process may be maintained in nearly all respects.

In the following, the invention will be explained more in detail with reference to various embodiments thereof shown, solely by way of example, in the accompanying drawings,
where
Fig. 1 is a schematic plan view of a first embodiment of a plastic film bag according to the invention,
Fig. 2 is a schematic plan view of a second embodiment of a plastic film bag according to the invention,
Fig. 3 is a cross section in enlarged scale taken along line A-A in Fig. 1,
Fig. 4 is a schematic view of the embodiment of Fig. 1 illustrating the opening manipulation thereof,
Fig. 5 is a diagrammatic view illustrating a prior art method of manufacturing gusseted plastic film bags,
Fig. 6 is a diagrammatic view illustrating the method of manufacturing gusseted easy to open plastic film bags according to the invention,
Fig. 7 is a schematic broken away perspective view of a third embodiment of a plastic film bag according to the invention, and
Fig. 8 is a schematic, perspective, partly broken-away view of a flattening and gusseting device according to the invention.

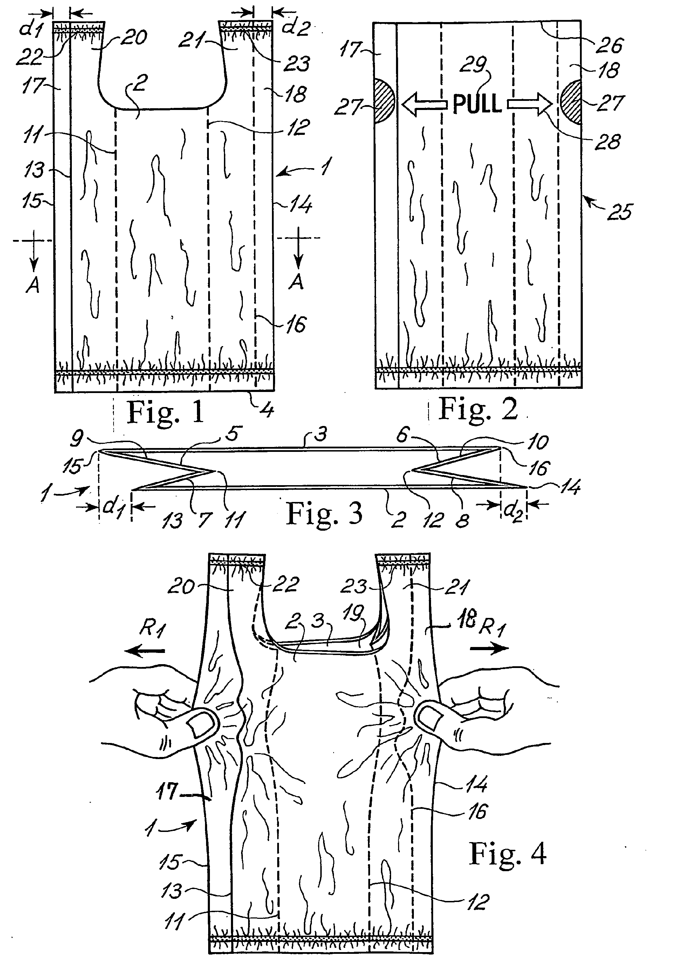

Referring now to Figs. 1 and 3, a bag 1 according to the invention made of a thin film of a plastic material such as polyethylene comprises a front wall 2 and a rear wall 3 joined to one another along the bottom edges thereof by means of a heat welding 4. The front wall 2 and the rear wall 3 are furthermore joined to one another along the lateral edges thereof by means of inwardly directed lateral gussets 5 and 6 comprising front panels 7 and 8, respectively, and rear panels 9 and 10, respectively.

The front panels 7 and 8 are joined to the rear panels 9 and 10, respectively along inner folds 11 and 12, respectively, and to the front wall 2 along boundary lines 13 and 14, respectively. The rear panels 9 and 10 are joined to the rear wall 3 along boundary lines 15 and 16, respectively.

The width of panel 9 is larger than the width of panel 7 such that a distance d1 is defined between boundary lines 13 and 15 in the flat condition of the bag 1 with the front wall 2 and the rear wall 3 abutting one another. Likewise, the width of panel 8 is larger than the width of panel 10 such that a distance d2 is defined between boundary lines 14 and 16 in said flat condition of the bag 1. Hereby, strip-like lateral zones 17 and 18 with widths d1 and d2, respectively, are defined.

By gripping the lateral zones 17 and 18 as illustrated in Fig. 4 and pulling in the direction of the arrows R1 the front wall 2 and rear wall 3 will slide laterally relative to one another until the gussets 5 and 6 are eliminated because the panels 7 and 9 and 8 and 10, respectively, are straightened out such that the folds 11, 13, 12 and 16 disappear. In this condition, the bag 1 will be open at the top with no tendency of the front wall 2 and the rear wall 3 to cling to one another because of cold welding, static electricity and other factors present in the region adjacent an opening 19 defined at the top of the bag by unjoined top edges of the front and rear walls 2 and 3.

Handles 20 and 21 are defined by upwardly extending strips of the front and rear walls 2 and 3 as well as the gusset panels 7 and 9 and 8 and 10, respectively, welded together along welding seams 22 and 23, respectively. The width of the handles 20 and 21 is larger than the widths d1 and d2 of the lateral zones 17 and 18 such that the lateral zones 17 and 18 are constituted by a lateral portion of the handles 20 and 21, respectively. Hereby, each of the handles 20 and 21 will be constituted by four layers of film, namely the front and rear wall films and the gusset panel films.

The larger the distances d1 and d2, which in the currently preferred embodiment of the bag according to the invention are substantially the same, the narrower the portion of the panels 7 and 10 contributing to the strength of the handles 20 and 21, respectively, will be. Therefore, it will be advantageous for the strength of the handles 20 and 21 to maintain the widths d1 and d2 of the lateral zones 17 and 18 as small as possible with due consideration to the ease of gripping said zones for opening the bag mouth.

Referring now to Fig. 2, a bag 25 very similar to bag 1 of Fig. 1 is not provided with handles, the opening 26 at the top of the bag stretching across the entire top edge thereof. Indicia in the form of shaded or coloured areas 27, arrows 28 and written instructions are applied to the front and rear walls 2 and 3 as well as to the panels 8 and 9 to indicate where to grip and how to open the bag by indicating the direction of pulling. The indicia may be of different kinds, for instance the entire top third of the lateral zones 17 and 18 may be shaded or coloured. These indicia may also be applied to the bag of Fig. 1.

Also in connection with this embodiment the widths d1 and d2 of the lateral zones 17 18 should be as small as practical because the total width of each of the lateral gussets 5 and 6 is reduced by d1 and d2, respectively, thereby reducing the total volume of the bag 25 in fully expanded condition. Furthermore, some of the advantages of lateral gussets reside in the shape of the bag at the bottom thereof, and the advantages inherent in lateral gussets in this respect are to a certain extent dependent on the width of the gussets.

It is currently preferred that the widths d1 and d2 are between 10mm and 14mm. However, smaller and larger widths d1 and d2 may be applied if the conditions of use, the plastic film material utilized, the overall size of the bag and other factors warrant it.

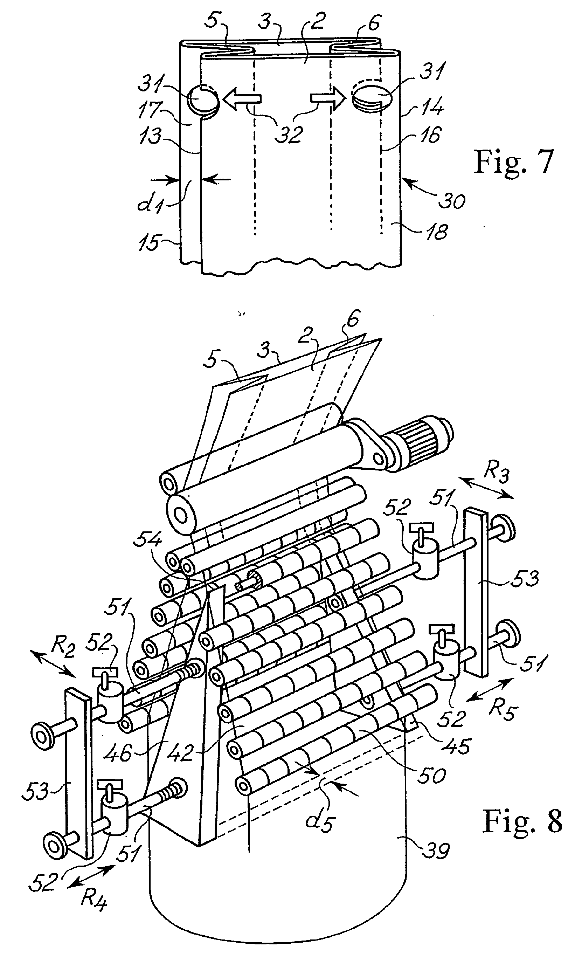

Referring now to Fig. 7, a bag 30 only differs from the bag 25 of Fig.2 by being provided with apertures 31 extending through the front and rear walls 2 and 3 as well as through the gussets 5 and 6 and interrupting the boundary folds 13 and 16. Hereby, a finger inserted in each of the apertures 31 and pulled in the direction of the arrows 32 will have the same effect as gripping the lateral zones 17 and 18 as explained above in connection with Fig. 4.

In this embodiment, the widths d1 and d2 of the lateral zones are solely determined by strength considerations and may be as small as such strength considerations dictate because the consideration of allowing gripping of the lateral zones is obviated by the apertures 31. Said apertures may have any size and shape and may be dimensioned for insertion of fingers or of a pair of diverging arms of a bag dispensing rack known in the art. Apertures 31 may likewise be applied to the bag of Fig. 1.

The apertures 31 may also be located entirely within the lateral zones 17 and 18, i.e. with the folds 13 and 16 being uninterrupted.

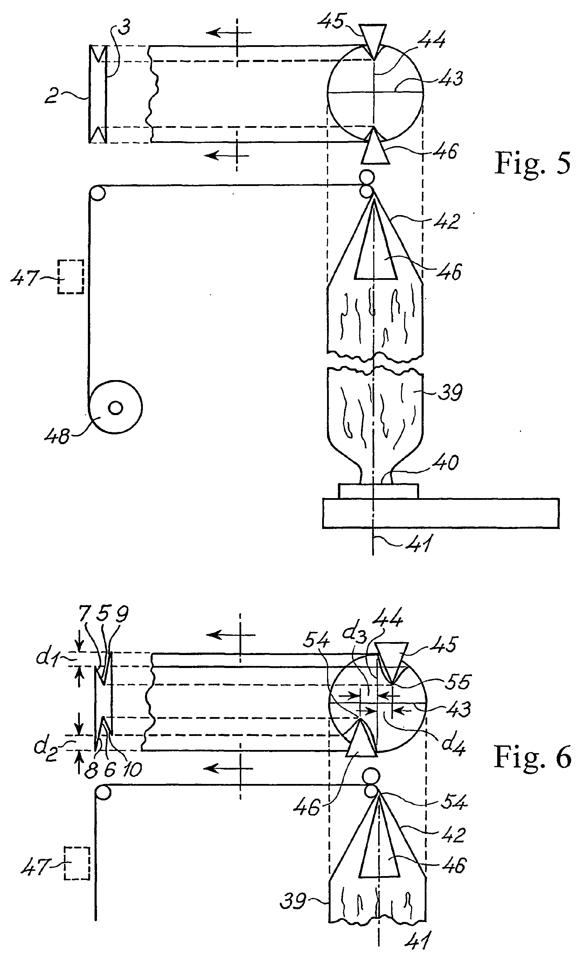

Referring now to Fig. 5, a prior art method for manufacturing plastic film gusset bags is illustrated, the bottom part of Fig. 5 being an elevational view and the top part being a top view of the same elements as the bottom part.

This prior art method comprises extruding a tube 39 of plastic film from an extruder at 40 and moving the tube upwards in the direction of the tube axis 41 to a flattening and gusseting device (see Fig. 8) where the tube 39 is flattened at 42 in the direction of the axis 41 parallel to a first diameter 43 of the tube while at the same time being pressed inwardly in the direction of the axis 41 parallel to a second diameter 44 perpendicular to diameter 42 by means of wedge shaped gusseting boards 45 and 46. Bottom welding, handle forming and any printing thereafter is performed at stations symbolized by station 47 whereafter the flattened tube is rolled up on a roller 48.

Referring now to Fig. 6, the method according to the invention is identical to the prior art method of Fig. 5 except that the gusseting boards 45 and 46 have been laterally displaced (or mutually offset) distances d3 and d4, respectively, with respect to the diameter 44 such that the gussets 5 and 6 formed by the gusseting boards 45 and 46, respectively, are asymmetrical with the panel 9 being d1 wider than panel 7 and panel 8 being d2 wider than panel 10 as explained above with relation to Fig. 1.

Referring now to Fig. 8, a flattening and gusseting device according to the invention comprises a double converging array of flattening rollers 50 for flattening the extruded plastic film tube 38 as explained above, one of the flattening rollers being cut away in the Figure so as to show the pressing edge 54 of the gusseting board 46. The gusseting boards 45 and 46 are arranged displaceable (mutually offsetable) in the directions R4, R5, respectively, which is illustrated symbolically by the suspension of the gusseting boards on axles 51 having adjustment screws 52 for displacing the top and bottom of the boards to and fro in the direction of the axles 51 (in the direction of a radius of the circular cross section of the tube) for varying the inward extent of the gussets, i.e. the width of the panels thereof. The above features are incorporated in prior art devices.

The novel features of the device according to the invention comprise a further displaceable arrangement of the gusseting boards 45 and 46 affording the possibility of displacing the gusseting boards in the directions R2 and R3 perpendicular to the axles 51 which is illustrated symbolically by means of the shown suspension plates 53 that may be displaced in the directions R2 and R3, for instance the distances d3 and d4, respectively, shown in Fig. 6, whereby the total distance d5 between the pressing edges 54 and 55 of the boards 46 and 45, respectively, is achieved, d5 being equal to the sum of d3 and d4. The lateral displacement directions R2 and R3 of the gusseting boards do not necessarily have to be perpendicular to the axles 51 as long as a displacement transverse to the axles 51 may result in the desired offsetting of the boards with respect to the axis 41 of the tube 39.

Naturally, the pressing means for forming gussets and the flattening means may be configured in many other ways which will be obvious to those skilled in the art.

## Claims

1. An easy to open plastic film bag (1) comprising a front bag wall (2) and a rear bag wall (3) joined to one another along bottom edges (4) thereof and along opposed mutually substantially parallel lateral edges (14, 15) thereof by a first and a second inwardly directed lateral gusset (5, 6) extending along a respective one of said lateral edges (14, 15) to define a bag having a top opening (19) defined by top edges of said front and rear walls (2, 3), said front and rear walls (2, 3) being laterally displaced relative to one another such that the lateral edge (13, 14) of said front wall (2) constituting the boundary between said front bag wall (2) and said first and second lateral gusset (5, 6), respectively, extends at a first and a second distance (d₁, d₂), respectively, from the corresponding lateral edge (15, 16) of said rear wall (3) constituting the boundary between said rear bag wall (3) and said first and second lateral gusset (5, 6), respectively, thereby defining a first strip-like lateral zone (17) with a width equal to said first distance (d₁), and constituted by a portion of said first gusset (5) and a portion of said front wall (2), and a second strip-like lateral zone (18) with a width equal to said second distance (d₂), and constituted by a portion of said second gusset (6) and a portion of said rear wall (3) **characterized in that** said first and/or second distance (d₁, d₂) is less than 16mm, preferably less than 14mm.

2. A bag (1) according to claim 1, wherein said first and second distances (d₁, d₂) are substantially the same size such that the widths of said first and second lateral zones (17, 18) are substantially the same.

3. A bag (1) according to claims 1 or 2, wherein said bag (1) is a bag with two handles (20, 21), for instance a T-shirt bag, the handles (20, 21) being integral with said walls (23) and said gussets (5, 6) and extending upwards at the opposed ends of said top opening (19) and inwards from said lateral edges (14, 15), the width of each of said handles (20, 21) measured from the respective lateral edge (14, 15) being larger than the respective one of said first and second distances (d₁, d₂), such that said first and second lateral zones (17, 18) constitute a lateral portion of the respective handle (20, 21).

4. A bag (1) according to any of the preceding claims, wherein indicia (27, 28, 29) are applied; for instance by printing, to the outer surface of said front wall (2) and/or said rear wall (3) for indicating where and/or how said strip-like lateral zones (17, 18) are to be gripped and manipulated.

5. A bag (1) according to claim 4, wherein said indicia (27, 28, 29) comprise printing (27) applied within an area of at least one of said lateral zones (17, 18).

6. A bag (1) according to claim 4 or 5, wherein said indicia (27, 28, 29) comprise an arrow (28) pointing towards a certain area of at least one of said lateral zones (17, 18).

7. A bag (1) according to any of the preceding claims, wherein an aperture (31) is provided extending through at least one of said front and rear walls (2, 3) and each gusset (5, 6), said aperture (31) extending inwards from a point located between the innermost (13, 16) and the outermost (14, 15) of the pair of lateral edges of the front and rear walls (2, 3) corresponding to said gusset (5, 6), preferably to a point located inwards of the innermost (13, 16) of said pair of lateral edges.

8. A bag (1) according to claim 7, wherein said aperture (31) is sufficiently large to permit insertion of a finger of a hand therethrough.

9. A method of manufacturing easy to open plastic film bags (1), each comprising a front bag wall (2) and a rear bag wall (3) joined to one another along bottom edges (4) thereof and along opposed mutually substantially parallel lateral edges (14, 15) thereof by a first and a second inwardly directed lateral gusset (5, 6) extending along a respective one of said lateral edges (14, 15) to define a bag having a top opening (19) defined by top edges of said front and rear walls (2, 3), said front and rear walls (2, 3) being laterally displaced relative to one another such that the lateral edge of said front wall (13, 14) constituting the boundary between said front bag wall (2) and said first and second lateral gusset (5, 6), respectively, extends at a first and a second distance ((d₁, d₂), respectively, from the corresponding lateral edge (15, 16) of said rear wall (3) constituting the boundary between said rear bag wall (3) and said first and second lateral gusset (5, 6), respectively, thereby defining a first strip-like lateral zone (17) with a width equal to said first distance (d₁) and constituted by a portion of said first gusset (5) and a portion (2) of said front wall, and a second strip-like lateral zone (18) with a width equal to said second distance (d₂) and constituted by a portion of said second gusset (6) and a portion of said rear wall (3), the method comprising the following steps:
- providing a continuous tube (39) of a plastic film material,
- feeding said tube (39) to a flattening and gusseting device in the direction of the tube axis (41).
- flattening said tube (39) by pressing the sides thereof against each other in the direction of a first diameter (43) of said tube (39) substantially perpendicular to said axis (41),
- forming said first and second lateral gusset (5, 6), preferably during said flattening step, by applying a first and a second pressing means (45, 46), respectively, of said device to said tube (39) for pressing generally opposed, but mutually offset, regions of the film material of said tube (39) inwards in a direction parallel to a second diameter (44) of said tube substantially perpendicular to said first diameter (43),
the first and second pressing means (45, 46) being displaced a first distance and a second distance d₃, d₄, respectively, with respect to said second diameter (44) in mutually opposed directions parallel to said first diameter (43) such that the widths of the two inwardly directed, mutually joined panels (7, 9; 8, 10) of each lateral gusset formed thereby are different such that said first and second lateral zones (17, 18) are formed.

10. A method according to claim 9, wherein said first distance d₃ and said second distance d₄ are substantially the same.

11. A flattening and gusseting device for manufacturing easy to open plastic film bags (1) each comprising a front bag wall (2) and a rear bag wall (3) joined to one another along bottom edges (4) thereof and along opposed mutually substantially parallel lateral edges (14, 15) thereof by a first and a second inwardly directed lateral gusset (5, 6) extending along a respective one of said lateral edges (14, 15) to define a bag (1) having a top opening (19) defined by top edges of said front and rear walls (2, 3), said front and rear walls (2,3) being laterally displaced relative to one another such that the lateral edge of said front wall (13, 14) constituting the boundary between said front bag wall (2) and said first and second lateral gusset (5, 6), respectively, extends at a first and a second distance (d₁, d₂), respectively, from the corresponding lateral edge (15, 16) of said rear wall (3) constituting the boundary between said rear bag wall (3) and said first and second lateral gusset (5, 6), respectively, thereby defining a first strip-like lateral zone (17) with a width equal to said first distance (d₁) and constituted by a portion of said first gusset (5) and a portion of said front wall (2), and a second strip-like lateral zone (10) with a width equal to said second distance (d₂) and constituted by a portion of said second gusset (6) and a portion of said rear wall (3), said device comprising
- a driven roller for pulling a flattened extruded tube (39) of plastic film material through said device,
- two converging arrays of flattening rollers (50) arranged and adapted for flattening said tube (39) when said tube is pulled between said arrays (50) in the converging direction thereof,
- two generally opposed pressing means (45, 46) for pressing generally opposed regions of said tube (39) inwards when said tube (39) is pulled between said pressing means (45, 46),
said pressing means (45, 46) being arranged displaceable both in a first radial direction (R4, R5) towards the axis (41) of said tube (39) and a second direction (R2, R3) transverse to, preferably at right angles to, said first direction such that said generally opposed regions may be mutually offset with respect to said axis (41) to form said first and second lateral zones (17, 18).

## Patentansprüche

1. Ein leicht zu öffnender Kunststofffolienbeutel (1), umfassend eine Vorderbeutelwand (2) und eine Rückbeutelwand (3), die längs deren Bodenkanten (4) und längs deren entgegengesetzter gegenseitig im Wesentlichen paralleler Seitenkanten (14, 15) durch eine erste und eine zweite einwärts gerichtete Seitenfalte (5, 6) miteinander verbunden sind, die sich jeweils längs einer der Seitenkanten (14, 15) erstrecken, um einen Beutel mit einer obersten Öffnung (19) abzugrenzen, die durch oberste Kanten der Vorder- und Rückwände (2, 3) abgegrenzt ist, wobei die Vorder-und Rückwände (2, 3) so zueinander seitlich versetzt sind, dass die Seitenkante (13, 14) der Vorderwand (2), welche die Grenze zwischen der Vorderbeutelwand (2) und der ersten bzw. der zweiten Seitenfalte (5, 6) darstellt, sich in einem ersten bzw. einem zweiten Abstand (d₁, d₂) von der entsprechenden Seitenkante (15, 16) der Rückwand (3) erstreckt, welche die Grenze zwischen der Rückbeutelwand (3) und der ersten bzw. der zweiten Seitenfalte (5, 6) darstellt, wodurch eine erste streifenartige Seitenzone (17) mit einer Breite gleich dem ersten Abstand (d₁) abgegrenzt wird, und von einem Teil der ersten Seitenfalte (5) und einem Teil der Vorderwand (2) gebildet wird, sowie eine zweite streifenartige Seitenzone (18) mit einer Breite gleich dem zweiten Abstand (d₂), und von einem Teil der zweiten Seitenfalte (6) und einem Teil der Rückwand (3) gebildet, **dadurch gekennzeichnet, dass** der erste und/oder zweite Abstand (d₁, d₂) weniger als 16mm, bevorzugt weniger als 14mm ist.

2. Beutel (1) nach Anspruch 1, wobei der erste und zweite Abstand (d₁, d₂) im Wesentlichen die gleiche Größe aufweisen, so dass die Breiten der ersten und zweiten Seitenzone (17, 18) im Wesentlichen gleich sind.

3. Beutel (1) nach Anspruch 1 oder 2, wobei der Beutel (1) ein Beutel mit zwei Griffen (20, 21) ist, zum Beispiel ein T-Shirtbeutel, wobei die Griffe (20, 21) ein integrierender Bestandteil der Wände (23) und der Seitenfalten (5, 6) sind und sich aufwärts an den entgegengesetzten Enden der obersten Öffnung (19) und nach innen von den Seitenkanten (14, 15) erstrecken, wobei die Breite jedes der Griffe (20, 21) gemessen von der jeweiligen Seitenkante (14, 15) grösser als die der ersten und zweiten Abstände (d₁, d₂) ist, so dass die erste und zweite Seitenzone (17, 18) einen Seitenteil des jeweiligen Griffs (20, 21) darstellen.

4. Beutel (1) nach einem der vorangehenden Ansprüche, wobei Kennzeichen (27, 28, 29), zum Beispiel durch Drucken, an der Außenfläche der Vorderwand (2) und/oder der Rückwand (3) angebracht sind, um anzugeben, wo und/oder wie die streifenartigen Seitenzonen (17, 18) gegriffen und gehandhabt werden sollen.

5. Beutel (1) nach Anspruch 4, wobei die Kennzeichen (27, 28, 29) Drucken (27) umfassen, das innerhalb eines Bereichs mindestens einer der Seitenzonen (17, 18) angeordnet ist.

6. Beutel (1) nach Anspruch 4 oder 5, wobei die Zeichen (27, 28, 29) einen Pfeil (28) umfassen, der in Richtung eines bestimmten Bereichs mindestens einer der Seitenzonen (17, 18) zeigt.

7. Beutel (1) nach einem der vorhergehenden Ansprüche, wobei eine Öffnung (31) vorgesehen ist, die sich durch mindestens eine der Vorder- und Rückwände (2, 3) und jede Seitenfalte (5, 6) erstreckt, wobei die Öffnung (31) sich nach innen von einem Punkt erstreckt, der zwischen der innersten (13, 16) und der äußersten (14, 15) des Paars von Seitenkanten der Vorder- und Rückwände (2, 3) entsprechend der Seitenfalte (5, 6) angeordnet ist, bevorzugt zu einem Punkt, der nach innen von der innersten (13, 16) des Paars von Seitenkanten angeordnet ist.

8. Beutel (1) nach Anspruch 7, wobei die Öffnung (31) genügend groß ist, um die Einführung eines Fingers einer Hand dahindurch zu ermöglichen.

9. Verfahren zum Herstellen leicht zu öffnender Kunststofffolienbeutel (1), je umfassend eine Vorderbeutelwend (2) und eine Rückbeutelwand (3), die längs deren Bodenkanten (4) und längs deren entgegengesetzter gegenseitig im Wesentlichen paralleler Seitenkanten (14, 15) durch eine erste und eine zweite einwärts gerichtete Seitenfalte (5, 6) miteinander verbunden sind, die sich jeweils längs einer der Seitenkanten (14, 15) erstrecken, um einen Beutel mit einer obersten Öffnung (19) abzugrenzen, die durch oberste Kanten der Vorder- und Rückwände (2, 3) abgegrenzt ist, wobei die Vorder- und Rückwände (2, 3) so zueinander seitlich versetzt sind, dass die Seitenkante der Vorderwand (13, 14), welche die Grenze zwischen der Vorderbeutelwand (2) und der ersten bzw. der zweiten Seitenfalte (5, 6) darstellt, sich in einem ersten bzw, einem zweiten Abstand (d₁, d₂) von der entsprechenden Seitenkante (15, 16) der Rückwand (3) erstreckt, welche die Grenze zwischen der Rückbeutelwand (3) und der ersten bzw. der zweiten Seitenfalte (5, 6) darstellt, wodurch eine erste streifenartige Seitenzone (17) mit einer Breite gleich dem ersten Abstand (d₁) abgegrenzt wird, und von einem Teil der ersten Seitenfalte (5) und einem Teil der Vorderwand (2) gebildet wird, sowie eine zweite streifenartige Seitenzone (10) mit einer Breite gleich dem zweiten Abstand (d₂), und von einem Teil der zweiten Seitenfalte (6) und einem Teil der Rückwand (3) gebildet, wobei das Verfahren die folgenden Schritte aufweist:
- Bereitstellen eines kontinuierlichen Rohrs (39) aus einem Kunststofffolienmaterial,
- Zuführen des Rohrs (39) einer Vorrichtung zum Glätten und Bilden von Seitenfalten in der Richtung der Rohrachse (41),
- Glätten des Rohrs (39) durch Pressen dessen Seiten gegeneinander in Richtung eines ersten Durchmessers (43) des Rohrs (39) im Wesentlichen senkrecht auf die Achse (41),
- Bilden der ersten und zweiten Seitenfalte (5, 6), bevorzugt während des Glättschrittes, durch Anwendung eines ersten bzw. eines zweiten Pressmittels (45, 46) der Vorrichtung auf das Rohr (39) zum Pressen im Allgemeinen entgegengesetzter, aber gegenseitig versetzter Bereiche des Folienmaterials des Rohrs (39) nach innen in einer Richtung parallel zu einem zweiten Durchmesser (44) des Rohrs im Wesentlichen senkrecht auf den ersten Durchmesser (43),
wobei das erste und zweite Pressmittel (45, 46) um einen ersten Abstand bzw. einen zweiten Abstand d₃, d₄, im Verhältnis zum zweiten Durchmesser (44) in gegenseitig entgegengesetzten Richtungen parallel zum ersten Durchmesser (43) in einer solchen Weise versetzt sind, dass die Breiten der beiden nach innen gerichteten, gegenseitig verbundenen Paneele (7, 9; 8, 10) jeder Seitenfalte, die **dadurch** gebildet wird, verschieden sind, so dass die erste und zweite Seitenzone (17, 18) gebildet werden.

10. Verfahren nach Anspruch 9, wobei der erste Abstand d₃ und der zweite Abstand d₄ im Wesentlichen gleich sind.

11. Vorrichtung zum Glätten und Bilden von Seitenfalten zum Herstellen leicht zu öffnender Kunststofffolienbeutel (1), je umfassend eine Vorderbeutelwand (2) und eine Rückbeutelwand (3), die längs deren Bodenkanten (4) und längs deren entgegengesetzter gegenseitig im Wesentlichen paralleler Seitenkanten (14, 15) durch eine erste und eine zweite einwärts gerichtete Seitenfalte (5, 6) miteinander verbunden sind, die sich jeweils längs einer der Seitenkanten (14, 15) erstrecken, um einen Beutel mit einer obersten Öffnung (19) abzugrenzen, die durch oberste Kanten der Vorder- und Rückwände (2, 3) abgegrenzt ist, wobei die Vorder- und Rückwände (2, 3) so zueinander seitlich versetzt sind, dass die Seitenkante der Vorderwand (13, 14), welche die Grenze zwischen der Vorderbeutelwand (2) und der ersten bzw. der zweiten Seitenfalte (5, 6) darstellt, sich in einem ersten bzw. einem zweiten Abstand (d₁, d₂) von der entsprechenden Seitenkante (15, 16) der Rückwand (3) erstreckt, welche die Grenze zwischen der Rückbeutelwand (3) und der ersten bzw. der zweiten Seitenfalte (5, 6) darstellt, wodurch eine erste streifenartige Seitenzone (17) mit einer Breite gleich dem ersten Abstand (d₁) abgegrenzt wird, und von einem Teil der ersten Seitenfalte (5) und einem Teil der Vorderwand (2) gebildet wird, sowie eine zweite streifenartig Seitenzone (10) mit einer Breite gleich dem zweiten Abstand (d₂), und von einem Teil der zweiten Seitenfalte (6) und einem Teil der Rückwand (3) gebildet, wobei die Vorrichtung umfasst
- eine angetriebene Walze zum Ziehen eines geglätteten extrudierten Rohrs (39) aus Kunststofffolienmaterial durch die Vorrichtung,
- zwei konvergierende Anordnungen von Glättwalzen (50), die zum Glätten des Rohrs (39) angeordnet und eingerichtet sind, wenn das Rohr zwischen den Anordnungen (50) in der konvergierenden Richtung gezogen wird,
- zwei im Allgemeinen entgegengesetzte Pressmittel (45, 46) zum Pressen im Allgemeinen entgegengesetzter Bereiche des Rohrs (39) nach innen, wenn das Rohr (39) zwischen den Pressmitteln (45, 46) gezogen wird,
wobei die Pressmittel (45, 46) sowohl in einer ersten radialen Richtung (R4, R5) in Richtung der Achse (41) des Rohrs (39) als auch in einer zweiten Richtung (R2, R3) quer zu, bevorzugt rechtwinklig zur ersten Richtung so versetzbar angeordnet ist, dass die im Allgemeinen entgegengesetzten Bereiche im Verhältnis zur Achse (41) gegenseitig versetzt werden können, um die erste und zweite Seitenzone (17, 18) zu bilden.

## Revendications

1. Sac en feuille de plastic facile à ouvrir (1) comprenant une paroi de sac avant (2) et une paroi de sac arrière (3) joints l'une à l'autre le long de bords de fond (4) de celles-ci et le long de bords latéraux opposés (14, 15) de celles-ci qui sont mutuellement et substantiellement parallèles par un premier et un deuxième soufflet latéral vers l'intérieur (5, 6) s'étendant le long d'un des bords latéraux respectif (14, 15) pour définir un sac ayant une ouverture supérieure (19) définie par des bords supérieurs desdites parois avant et arrière (2, 3), lesdites parois avant et arrière (2, 3) étant latéralement déplacées l'une par rapport à l'autre de manière à ce que le bord latéral (13, 14) de ladite paroi avant (2) constituant la limite entre ladite paroi de sac avant (2) et lesdits premier et deuxième soufflets latéraux (5, 6), respectivement, s'étendent à une première et une deuxième distance (d₁, d₇), respectivement, du bord latéral correspondant (15, 16) de ladite paroi arrière (3) constituant la limite entre ladite paroi de sac arrière (3) et ledit premier et deuxième soufflets latéraux (5, 6), respectivement, définissant ainsi une première zone en forme de bande latérale (17) d'une largeur égale à la première distance (d₁) et constituée par une portion dudit premier soufflet (5) et une portion de ladite paroi avant (2), et une deuxième zone en forme de bande latérale (18) d'une largeur égale à la deuxième distance (d₂) et constituée par une portion du deuxième soufflet (6) et une portion de ladite paroi arrière (3) **caractérisée en ce que** ladite première et/ou deuxième distance (d₁, d₂) est/sont inférieure(s) à 16mm, de préférence inférieure(s) à 14mm.

2. Sac (1) selon la revendication 1, lesdites première et deuxième distances (d₁, d₂) ayant substantiellement les mêmes dimensions de manière à ce que les largeurs des premières et deuxièmes zones latéraux (17, 18) sont substantiellement identiques.

3. Sac (1) selon les revendications 1 ou 2, ledit sac (1) étant un sac avec deux poignées (20, 21), par exemple un sac T-shirt, les poignées (20, 21) étant intégrées avec lesdites parois (23) et lesdits soufflets (5, 6) et s'étendant vers le haut aux extrémités opposées de ladite ouverture supérieure (19) et vers l'intérieur à partir desdits bords latéraux (14, 15), la largeur de chacune desdites poignées (20, 21) mesurée dudit bord latéral respectif (14, 15) étant plus large que la largeur respective desdites première et deuxième distances (d₁, d₂), respectivement, de manière à ce que ladite première et deuxième zones latérales (17, 18) constituent une portion latérale de la poignée respective (20, 21).

4. Sac (1) selon l'une quelconque des revendications précédentes, des indices (27, 28, 29) étant appliqués, par exemple par impression, à la surface extérieure de ladite paroi avant (2) et/ou ladite paroi arrière (3) pour indiquer où et/ou comment lesdites zones latérales en forme de bande (17, 18) doivent être saisies ou manipulées.

5. Sac (1) selon la revendication 4, lesdits indices (27, 28, 29) comprenant de l'impression (27) appliqué dans les limites d'au moins une desdites zones latérales (17, 18).

6. Sac (1) selon la revendication 4 ou 5, lesdits indices (27, 28, 29) comprenant une flèche (28) qui est orientée vers un certain point d'au moins une ou plusieurs desdites zones latérales (17, 18).

7. Sac (1) selon l'une quelconque des revendications précédentes, une ouverture (31) étant fournie s'étendant à travers au moins l'une desdites parois avant et arrières (2, 3) et chaque soufflet (5, 6), ladite ouverture (31) s'étendant vers l'intérieure à partir d'un point localisé entre le plus interne (13, 16) et le plus externe (14, 15) de la paire des bords latéraux des parois avant et arrière (2, 3) correspondant audit soufflet (5, 6), de préférence à un point localisé vers l'intérieure du plus interne (13, 16) de ladite paire de bords latéraux.

8. Sac (1) selon la revendication 7, ladite ouverture (31) étant suffisamment large pour permettre l'insertion d'un doigt d'une main au travers.

9. Procédé de production de sacs en feuille plastique faciles à ouvrir (1), chacun comprenant une paroi de sac avant (2) et une paroi de sac arrière (3) joint l'une à l'autre le long des bords de fond (4) de celles-ci et le long de bords latéraux opposés (14, 15) de celles-ci qui sont mutuellement et substantiellement parallèles par un premier et un deuxième soufflet latéral vers l'intérieur (5, 6) s'étendant le long d'un des bords latéraux respectif (14, 15) pour définir un sac ayant une ouverture supérieure (19) définie par des bords supérieurs desdites parois avant et arrière (2, 3), lesdites parois avant et arrière (2, 3) étant latéralement déplacées l'une par rapport à l'autre de manière à ce que le bord latéral (13, 14) de ladite paroi avant (2) constituant la limite entre ladite paroi de sac avant (2) et lesdits premier et deuxième soufflets latéraux (5, 6), respectivement, s'étendent à une première et une deuxième distance (d₁, d₂), respectivement, du bord latéral correspondant (15, 16) de ladite paroi arrière (3) constituant la limite entre ladite paroi de sac arrière (3) et ledit premier et deuxième soufflet latéral (5, 6), respectivement, définissant ainsi une première zone en forme de bande latérale (17) d'une largeur égale à la première distance (d₁) et constituée par une portion dudit premier soufflet (5) et une portion de ladite paroi avant (2), et une deuxième zone en forme de bande latérale (18) d'une largeur égale à la deuxième distance (d₂) et constituée par une portion du deuxième soufflet (6) et une portion de ladite paroi arrière (3), le procédé comprenant les étapes suivantes:
- fournir un tube continu (39) d'un matériau en feuille plastique,
- alimenter ledit tube (39) à un dispositif d'aplatissement et de pliage en soufflets dans la direction de l'axe du tube (41),
- aplatir ledit tube (39) en pressant les côtés de celui-ci l'un Contre l'autre dans la direction d'un premier diamètre (43) dudit tube (39) substantiellement perpendiculaire audit axe (41),
- former lesdits premier et deuxième soufflets (5, 6), préférablement pendant ladite étape aplatissante, en appliquant un premier et un deuxième moyens de pression (45, 46), respectivement, dudit dispositif audit tube (39) pour presser des régions du matériau de feuille dudit tube (39), vers l'intérieur dans une direction parallèle au deuxième diamètre (44) dudit tube substantiellement perpendiculaire au premier diamètre (43), lesdites régions étant généralement opposées, mais mutuellement décalées,
les premier et deuxième moyens de pression (45, 46) étant déplacés d'une première distance et une deuxième distance d₃, d₄, respectivement, relatif audit deuxième diamètre (44) dans des directions mutuellement opposées parallèles audit premier diamètre (43) de manière à ce que les largeurs des deux panneaux dirigés vers l'intérieur et joint mutuellement (7, 9; 8, 10) de chaque soufflet latéral ainsi formés sont différent de manière à ce que lesdites première et deuxième zones (17, 18) sont formées.

10. Procédé selon la revendication 9, ladite première distance d₃ et ladite deuxième distance d₄ étant substantiellement identiques.

11. Dispositif d'aplatissement et de pliage en soufflets pour produire des sacs en feuille plastique faciles à ouvrir (1), chacun comprenant une paroi de sac avant (2) et une paroi de sac arrière (3) joint l'une à l'autre le long des bords de fond (4) de celles-ci et le long de bords latéraux opposés (14, 15) de celles-ci qui sont mutuellement et substantiellement parallèles par un premier et un deuxième soufflet latéral vers l'intérieur (5, 6) s'étendant le long d'un des bords latéraux respectif (14, 15) pour définir un sac ayant une ouverture supérieure (19) définie par des bords supérieurs desdites parois avant et arrière (2, 3), lesdites parois avant et arrière (2, 3) étant latéralement déplacées l'une par rapport à l'autre de manière à ce que le bord latéral (13, 14) de ladite paroi avant (2) constituant la limite entre ladite paroi de sac avant (2) et lesdits premier et deuxième soufflets latéraux (5, 6), respectivement, s'étendent à une première et une deuxième distance (d₁, d₂), respectivement, du bord latéral correspondant (15, 16) de ladite paroi arrière (3) constituant la limite entre ladite paroi de sac arrière (3) et ledit premier et deuxième soufflets latéraux (5, 6), respectivement, définissant ainsi une première zone en forme de bande latérale (17) d'une largeur égale à la première distance (d₁) et constituée par une portion dudit premier soufflet (5) et une portion de ladite paroi avant (2), et une deuxième zone en forme de bande latérale (18) d'une largeur égale à la deuxième distance (d₂) et constituée par une portion du deuxième soufflet (6) et une portion de ladite paroi arrière (3), le dispositif comprenant
- un rouleau commandé pour tirer un tube aplati et extrudé (39) de matériau de feuille plastique à travers ledit dispositif,
- deux séries convergentes de rouleaux aplatissants (50) arrangés et adaptés pour aplatir ledit tube (39) lorsque ledit tube est tiré entre lesdites séries (50) dans la direction convergente de celles-ci,
- deux moyens de pression généralement opposées (45, 46) pour presser des régions généralement opposées dudit tube (39) vers l'intérieur lorsque ledit tube (39) est tire entre lesdits moyens de pression (45, 46),
lesdits moyens de pression (45, 46) étant arrangés de manière à pouvoir être déplacés et dans une première direction radiale (R4, R5) vers l'axe (41) dudit tube (39), et dans une deuxième direction (R2, R3) transversale, de préférence rectangulaire à, à ladite première direction de manière à ce que lesdites régions généralement opposées peuvent être mutuellement décalées par rapport audit axe (41) pour former lesdites première et deuxième zones latérales (17, 18).
